# EUROPEAN PATENT APPLICATION

(11) **EP 2 890 102 A1**
(43) Date of publication of application: **01.07.2015**
(21) Application number: 14199927.6
(22) Date of filing: 23.12.2014
(51) Int. Cl.: H04N 1/00

(54) **Image scanner, and multifunction device with image scanner**

(30) Priority: 26.12.2013 JP 2013268730
(71) Applicant: Funai Electric Co., Ltd., Daito-shi, Osaka 574-0013 (JP)
(72) Inventor: Tanaka, Hideaki, Daito-shi, Osaka 574-0013 (JP)
(74) Representative: Global IP Europe Patentanwaltskanzlei

(57) **Abstract**

An image scanner includes a housing having an opening, a document holder covering the opening in the housing, the document holder having a first region and a second region, a movable member movable relative to the first region of the document holder, a scanning component configured to scan the first region to optically sense the movable member, and configured to scan the second region to acquire an image of an object placed on the second region, and a recognition component configured to determine an operating condition of the image scanner based on a sensed state of the movable member that has been sensed by the scanning component.

## Description

### CROSS-REFERENCE TO RELATED APPLICATIONS

This application claims priority to Japanese Patent Application No. 2013-268730 filed on December 26, 2013. The entire disclosure of Japanese Patent Application No. 2013-268730 is hereby incorporated herein by reference.

### BACKGROUND

### Field of the Invention

The present invention generally relates to an image scanner and to a multifunction device with an image scanner.

### Background Information

With image scanners, multifunction devices equipped with an image scanner, and so forth, the operation components have been becoming increasingly simple, particularly with lower-priced models. For example, models that do not come with a liquid crystal display device or a touch panel, models with extremely few switches connected to the electrical circuitry, and so forth are on the market. With models such as these, the elimination of the liquid crystal display device or touch panel, or a reduction in the number of switches has cut the cost entailed by parts and assembly work. On the other hand, various settings cannot be made on the device itself, and are only possible via a computer connected to the device, so user convenience is often sacrificed.

Touch panels for recognizing user input without the use of electrical switches are used in conventional multifunction devices and are commonly known (see Japanese Laid-Open Patent Application Publication No. 2001-119505 (Patent Literature 1), for example). The touch panel disclosed in Patent Literature 1 is configured so that various openings that can be blocked off by the user with a finger, a slide panel, a pin, or another such member are provided to a document holder distal end position restrictor plate installed at the upper part of a movable optical unit. Whether or not an opening is blocked is optically detected by the movable optical unit, and settings are made or cleared according to whether blockage is sensed.

With the touch panel in Patent Literature 1, even with device models having extremely few electrical switches, various settings can be made at the device itself.

### SUMMARY

With a conventional tough panel, however, categories that can be set are limited by the type and number of openings that can be provided to the document holder distal end position restrictor plate, so it is not necessarily easy to set complicated, diverse categories. Also, if settings are made by having the user block the openings with a finger, an inconvenience is that the user cannot tell what is set after removing the finger.

One aspect is to provide an image scanner that has a simplified operation component, and that is suited to setting various types of category with the device itself, as well as a multifunction device equipped with this image scanner.

In view of the state of the known technology, an image scanner is provided that includes a housing having an opening, a document holder covering the opening in the housing, the document holder having a first region and a second region, a movable member movable relative to the first region of the document holder, a scanning component configured to scan the first region to optically sense the movable member, and configured to scan the second region to acquire an image of an object placed on the second region, and a recognition component configured to determine an operating condition of the image scanner based on a sensed state of the movable member that has been sensed by the scanning component.

Also other objects, features, aspects and advantages of the present disclosure will become apparent to those skilled in the art from the following detailed description, which, taken in conjunction with the annexed drawings, discloses one embodiment of the image scanner.

### BRIEF DESCRIPTION OF THE DRAWINGS

Referring now to the attached drawings which form a part of this original disclosure:
FIG. 1 is a perspective view of a multifunction device equipped with an image scanner in accordance with a first embodiment;
FIG. 2 is a top plan view of a movable member in accordance with the first embodiment;
FIG. 3 is a top plan view of a display produced by the movable member in accordance with the first embodiment;
FIG. 4 is a top plan view of a movable member in accordance with a second embodiment;
FIG. 5 is a top plan view and a cross sectional view of a movable member in accordance with a third embodiment;
FIG. 6 is a perspective view and a developed view of a side face of the movable member in accordance with the third embodiment;
FIG. 7 is a schematic diagram of a plurality of the movable members in accordance with the third embodiment;
FIG. 8 is a perspective view of the movable member in accordance with the third embodiment;
FIG. 9 is a side cross sectional view of a lid in accordance with a fourth embodiment;
FIG. 10 is a block diagram of the multifunction device;
FIG. 11 is a top plan view of a restricting member for restricting a movable member in accordance with a modified example; and
FIG. 12 is a top plan view of an object distal end position restrictor plate for restricting an object in accordance with a modified example.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layout positions and connection modes of the constituent elements, and so forth given in the following embodiments are provided all just for illustration only and not for the purpose of limiting the present invention. The present invention is merely defined by the appended claims. Of the constituent elements in the following embodiments, those not mentioned in an independent claim are not necessarily needed to achieve the object of the present invention, and will be described for understanding of the embodiments.

### FIRST EMBODIMENT

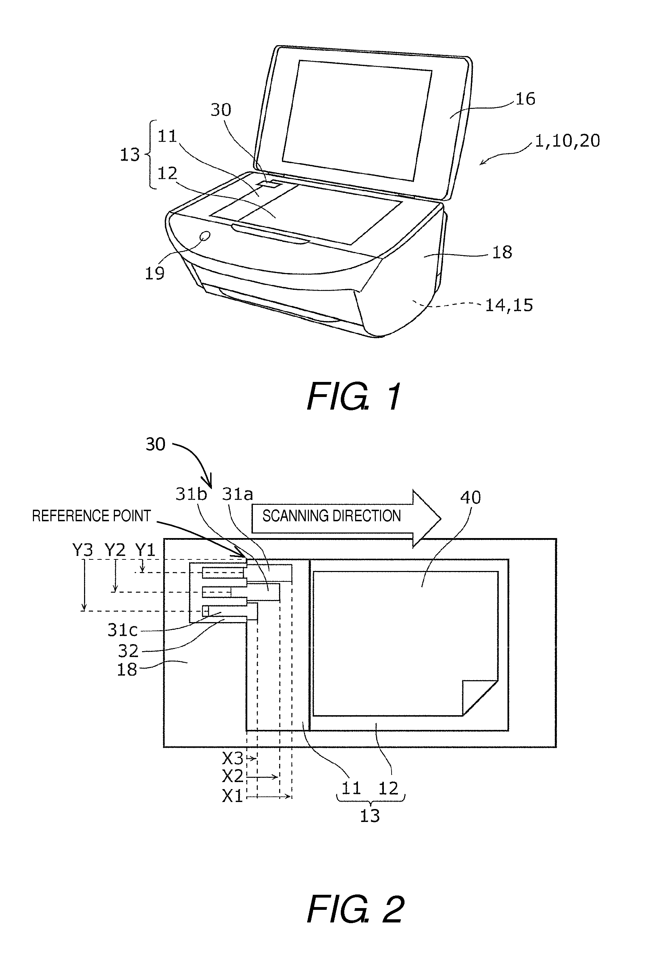

Referring initially to FIG. 1, a multifunction device 1 is illustrated in accordance with a first embodiment. The multifunction device 1 in accordance with the first embodiment includes an image scanner 10 and a printer 20. The multifunction device 1 has a function of acquiring an image of an object placed on a document holder 13 by scanning the object, a function of printing the acquired image of the object (that is, copying the object), and a function of printing an image displayed by data.

FIG. 1 is a perspective view of the multifunction device 1.

As mentioned above, the multifunction device 1 shown in FIG. 1 has the image scanner 10 and the printer 20 provided inside a single housing 18.

The image scanner 10 includes the housing 18, the document holder 13, a movable member 30, a scanning component 14, and a recognition component 15. The housing 18 has an opening in its top face. The document holder 13 is made of a transparent sheet covering the opening in the housing. The document holder 13 is divided into a first region 11 where no object is placed and a second region 12 where the object is placed. The movable member 30 can be disposed as the user desires in the first region 11 of the document holder 13. The scanning component 14 is provided under the document holder 13, optically senses the state of the movable member 30 by scanning the first region 11, and acquires an image of the object by scanning the second region 12. The recognition component 15 recognizes operating conditions associated with the sensed state of the movable member as the operating conditions of the image scanner 10. In the illustrated embodiment, the scanning component 14 includes a conventionally well-known hardware for scanning images. In particular, the scanning component 14 includes a light source for emitting light, an optical component for guiding the light, an image sensor, such as a CCD (Charge Coupled Devices), a CIS (Contact Image Sensor), and the like, and a drive mechanism. Since the scanning component 14 is conventionally well-known in the art, detailed descriptions of the scanning component 14 will be omitted for the sake of brevity.

The image scanner 10 can further include a lid 16 that covers the document holder 13 and can be opened and closed, and a start button 19 for instructing the image scanner 10 to start processing.

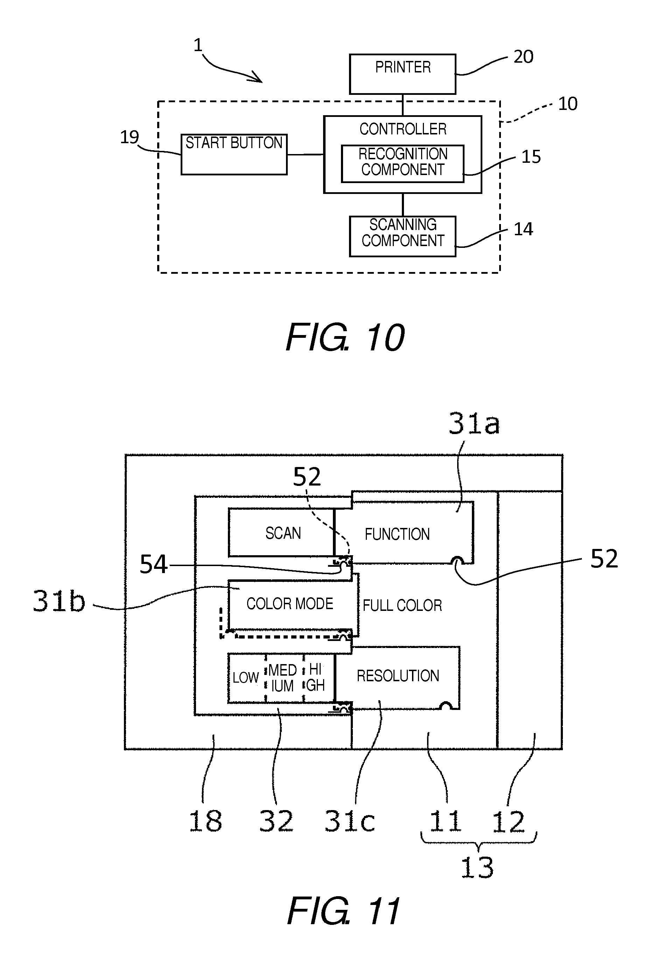

The recognition component 15 is made up of a processor and a memory, for example. The recognition component 15 can also be realized by a software function that is performed by executing a program stored ahead of time in the memory. Also, the recognition component 15 can be realized as a part of a controller for totally controlling the multifunction device 1. In the illustrated embodiment, the controller for realizing the recognition component 15 can be made of a processor, such as a microprocessor or a microcomputer, with a control program that controls various components of the multifunction device 1. The controller can also include other conventional components such as an input interface circuit, an output interface circuit, and storage devices such as a ROM (Read Only Memory) device and a RAM (Random Access Memory) device. The controller is programmed to control the various components of the multifunction device 1. The memory circuit stores processing results and control programs that are run by the processor. The internal RAM of the controller stores statuses of operational flags and various control data. The internal ROM of the controller stores the programs for various operations. The controller is capable of selectively controlling any of the components of the multifunction device 1 in accordance with the control program. It will be apparent to those skilled in the art from this disclosure that the precise structure and algorithms for the controller can be any combination of hardware and software that will carry out the functions of the present invention. In the illustrated embodiment, the controller for totally controlling the multifunction device 1 is electrically coupled to the scanning component 14, the start button 19, and the printer 20 in a conventional manner, as illustrated in FIG. 10.

The printer 20 is provided inside the same housing 18 as the image scanner 10, and prints an image of the object acquired by the image scanner 10, and an image displayed by data. This data can be obtained by wired or wireless communication from a device other than the multifunction device 1, such as a portable information terminal or a personal computer. In the illustrated embodiment, the printer 20 includes a conventionally well-known hardware for printing images. In particular, the printer 20 can be any type of printers conventionally known in the art, such as an inkjet printer, a thermal printer, a laser printer, an LED printer, and the like. As mentioned above, the printer 20 is electrically coupled to the controller for totally controlling the multifunction device 1 in a conventional manner. Since the printer 20 is conventionally well-known in the art, detailed descriptions of the printer 20 will be omitted for the sake of brevity.

FIG. 2 is a top plan view of the movable member 30 disposed in the first region 11.

FIG. 2 shows three movable members 31a, 31b, and 31c, as well as an object 40 that has been placed in the second region 12.

The movable members 31a, 31b, and 31c are installed on the top face of the housing 18, and are flat members that can be guided into and out of the first region 11. The movable members 31a, 31b, and 31c are made of plastic plates, for example, and held by a guide member 32 so as to be capable of sliding over the first region 11. The user can slide the movable members 31a, 31b, and 31c to put them in the desired state over the first region 11. In other words, the movable members 31a, 31b, and 31c are manually movable relative to the first region 11.

The object 40 can include sheet-form documents or photographs, thicker documents, three-dimensional objects, and so forth.

The scanning component 14 scans the first region 11 and thereby senses the color and/or shape of the portion of the movable members 31a, 31b, and 31c that has entered the first region 11. The recognition component 15 recognizes or determines the operating conditions associated with the color and/or shape sensed by the scanning component 14.

In the example in FIG. 2, one corner of the first region 11 is defined as a reference point, and the movable members 31a, 31b, and 31c are guided slidably over lines extending in the scanning direction at distances Y1, Y2, and Y3 from the reference point. Operating condition categories are associated with the distances Y1, Y2, and Y3 from the reference point, and the contents of the categories are associated with lengths X1, X2, and X3 of the portion of the movable members 31a, 31b, and 31c that enters the first region 11.

The scanning component 14 scans the first region 11 and thereby senses the lengths X1, X2, and X3 of the portion of the movable members 31a, 31b, and 31c that enters the first region 11 on lines extending in the scanning direction at the distances Y1, Y2, and Y3 from the reference point. In other words, the scanning component 14 scans a region (i.e., the first region 11) outside the second region 12 on which the object 40 is disposed.

The scanning component 14 can sense the lengths X1, X2, and X3 by sensing the distal ends of the movable members 31a, 31b, and 31c on the above-mentioned lines, or can sense the lengths X1, X2, and X3 only when the movable members 31a, 31b, and 31c have been sensed over the entire range of the lengths X1, X2, and X3 on the lines. In the latter case, it is less likely that foreign matter in the first region 11 will cause erroneous sensing.

The recognition component 15 recognizes the contents of the categories associated with the lengths X1, X2, and X3, for the categories of the operating conditions associated with the distances Y1, Y2, and Y3 based on the sensed lengths X1, X2, and X3, and the sensed lengths Y1, Y2, and Y3.

There are no particular restrictions on the categories of the operating conditions recognized by the recognition component 15 or the contents of these categories. In the illustrated embodiment, "function," "color mode," and "resolution," which are operating condition categories, are associated with the distances Y1, Y2, and Y3, respectively. Also, in the illustrated embodiment, the recognition component 15 then recognizes "scan" or "copy," which is the content of the category "function" corresponding to the length X1, recognize "full color" or "monochrome," which is the content of the category "color mode" corresponding to the length X2, and recognize "low," "medium," or "high," which is the content of the category "resolution" corresponding to the length X3.

The operating conditions recognized according to the state of the movable members 31a, 31b, and 31c can be displayed, in a state that can be perceived by the user, on one or more of the movable members 31a, 31b, and 31c, the first region 11, and the top face of the housing 18.

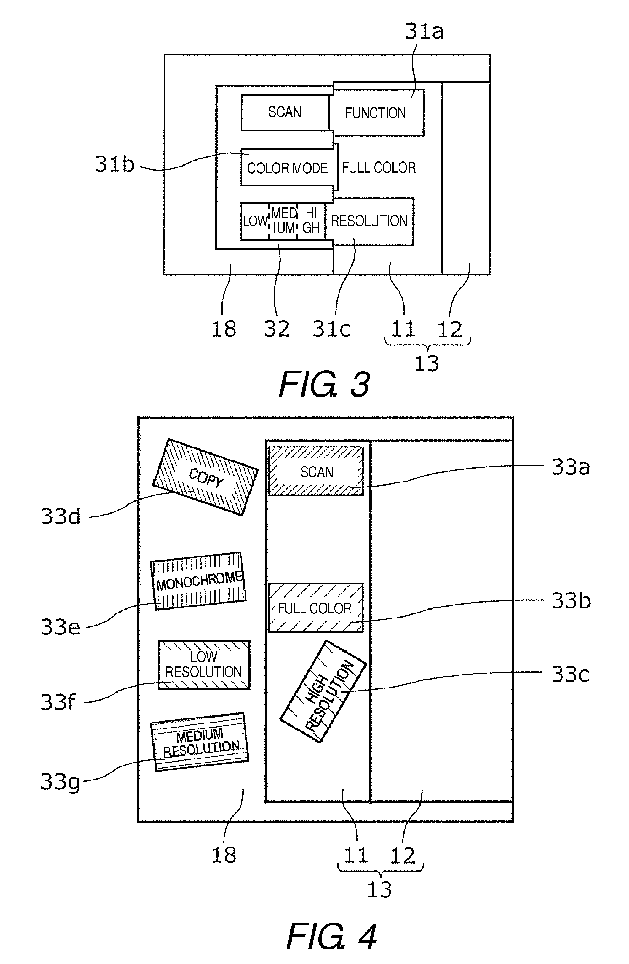

FIG. 3 is a top plan view of this display. Text of "function," "color mode," and "resolution" is displayed or written in a visually perceivable manner on the movable members 31a, 31b, and 31c, respectively. Text of "scan," "monochrome" (covered by the movable member 31b, and cannot be seen in FIG. 3), "low," "medium," and "high" is displayed or written in a visually perceivable manner within the movable ranges of the movable members 31a, 31b, and 31c on the top face of the housing 18. Of course, "300," "600," and "1200" indicative of "resolution" can be displayed or written in a visually perceivable manner within the movable range of the movable member 31c instead of "low," "medium," and "high" for indicating the content of the category "resolution". Text of "copy" (covered by the movable member 31a, and cannot be seen in FIG. 3) and "full color" is displayed or written in a visually perceivable manner within the movable ranges of the movable members 31a and 31b in the first region 11. These words can be displayed, for example, by silkscreen printing on the movable members 31a, 31b, and 31c, in the first region 11, and on the top face of the housing 18. These displays are not limited to text, and can instead be symbols or braille.

The movable members 31a, 31b, and 31c in the state shown in FIG. 3 represent the operating conditions of "perform canning in full color at high resolution." The user can, for example, put a finger on the movable member 31a and slide it into the guide member 32 from this state, and slide the movable member 31b over the first region 11. As a result, the state of the movable members 31a, 31b, and 31c represents operating conditions of "perform monochrome copying at high resolution," and at the same time shows the text of "copy" and "monochrome" that have been covered by the movable members 31a and 31b. Thus, the operating conditions set by the user will be displayed according to the state of the movable members 31a, 31b, and 31c even after the user has removed his finger.

The operation of the multifunction device 1 configured as above will now be described.

For example, after the user has placed the movable members 31a, 31b, and 31c in the state shown in FIG. 3, the start button 19 is pressed to instruct the multifunction device 1 to start processing.

Then, the multifunction device 1 continuously performs the sensing of the state of the movable members 31a, 31b, and 31c by scanning the first region 11, the recognition of the scanning conditions of "perform scanning in full color at high resolution" associated with the sensed state of the movable members 31a, 31b, and 31c, and the acquisition of an image of the object by scanning the second region 12 according to the recognized scanning conditions, in that order.

Also, for example, the user slides the movable member 31a into the guide member 32, slides the movable member 31b over the first region 11, and then presses the start button 19 to instruct the multifunction device 1 to start processing.

Then, the multifunction device 1 continuously performs the sensing of the state of the movable members 31a, 31b, and 31c by scanning the first region 11, the recognition of the scanning conditions and printing conditions of "perform monochrome printing at high resolution" (that is, scanning and printing) associated with the sensed state of the movable members 31a, 31b, and 31c, the acquisition of an image of the object by scanning the second region 12 according to the recognized scanning conditions, and the printing of the image of the object according to the recognized printing conditions, in that order.

Thus, upon receiving an instruction to start processing, the multifunction device 1 initially recognizes the operating conditions, then performs operation corresponding to the recognized conditions, so the operation intended by the user is executed smoothly and without anything seeming to be amiss.

The instruction to the multifunction device 1 to start processing can, for example, be an operation in which the user closes the lid 16. In this case, the start button 19 can be eliminated.

Also, if the multifunction device 1 prints printed matter represented by data provided from a device other than the multifunction device 1, such as a portable information terminal or a personal computer, the multifunction device 1 can start the print operation when the data is provided, so the user does not need to press the start button 19 or close the lid 16.

For example, the user puts the movable members 31b and 31c in the state shown in FIG. 3, and then operates the other device to send data representing printing matter to the multifunction device 1.

Then, the multifunction device 1 continuously performs the sensing of the state of the movable members 31b and 31c by scanning the first region 11, the recognition of the printing conditions of "full color at high resolution" associated with the sensed state of the movable members 31b and 31c, and the printing of the printed matter according to the recognized printing conditions.

Thus, upon receiving an instruction to start processing, during a series of operations, the multifunction device 1 initially recognizes the operating conditions, then performs operation corresponding to the recognized conditions, so the operation intended by the user is executed smoothly and without anything seeming to be amiss.

A few modification examples of the multifunction device 1 will now be described.

When there is a plurality of operating condition categories, the order of recognition is sometimes determined by the relation between the category contents, etc. In view of this, the contents of a category to be recognized first can be associated with a length that is shorter than the length of the portion of the movable member that goes into the first region 11, compared to the contents of other categories. For instance, in the example in FIG. 2, if whether the contents of the category "function" is "scan" or "copy" needs to be recognized ahead of the contents of the categories "color mode" and "resolution," then the range of X1 can be provided closer to the reference point in the scanning direction than the range of either X2 or X3.

In the illustrated embodiment, the shape of the portion of the movable members 31a, 31b, and 31c that moves into the first region 11 (that is, the distances Y1, Y2, and Y3 and the lengths X1, X2, and X3) is used to recognize the operating conditions, but the operating conditions can instead be recognized according to the colors of the movable members 31a, 31b, and 31c.

For example, the colors of the movable members, namely, red, green, and blue, can be associated with the categories "function," "color mode," and "resolution." In this case, the recognition component 15 can recognize the operating conditions from the length of the portion of the red, green, and blue movable members that goes into the first region 11, instead of the distances Y1, Y2, and Y3. Since the categories are associated with colors, a movable member whose color is associated with a category that changes often can be placed in front (or closer to the reference point), for instance, which makes the device more convenient for the user.

### SECOND EMBODIMENT

Referring now to FIG. 4, a multifunction device in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the second embodiment, another specific example of movable members 33a to 33g will be described. The movable members 33a to 33g in the second embodiment can be put in or removed from the first region 11, and are plate-shaped members represented by a specific color and/or a specific shape.

FIG. 4 is a top plan view of the movable members 33a to 33g in accordance with the second embodiment.

The movable members 33a to 33g shown in FIG. 4 are made of rectangular plastic plates that each has its own color, for example. The movable members 33a to 33g can be linked to the housing 18 by a cord (not shown) to keep them from coming loose. The user can hold the desired movable member 33a to 33g, put it in the first region 11, and remove it from the first region 11.

In the example in FIG. 4, the operating conditions of "scan," "copy," "full color," "monochrome," "high resolution," "medium resolution," and "low resolution" are associated with the different colors of the movable members 33a to 33g. The operating conditions of "scan," "copy," "full color," "monochrome," "high resolution," "medium resolution," and "low resolution" recognized when the movable members 33a to 33g are placed in the first region 11 can be displayed on the movable members 33a to 33g. Alternatively, contents in which there is a choice between two things, as between "scan" and "copy" or between "full color" and "monochrome," can be represented by a single movable member whose color is different front and back.

For example, as illustrated in FIG. 4, the scanning component 14 (see FIG. 1) senses the colors of the movable members 33a, 33b, and 33c placed in the first region 11 by scanning the first region 11.

The recognition component 15 recognizes the operating conditions associated with the color sensed by the scanning component 14. In the example in FIG. 4, by sensing the colors of the movable members 33a, 33b, and 33c, the recognition component 15 recognizes the operating conditions of "perform full-color scanning at high resolution."

With this configuration, the multifunction device 1 executes the operation desired by the user when the user puts the movable members 33a to 33g displaying the desired contents in the first region 11 and then gives an instruction to the multifunction device 1 to start processing.

In the above example, the movable members 33a to 33g are rectangular plastic plates of different colors, but the movable members 33a to 33g can be plastic plates of the same color but different shapes, or can be plastic plates of different colors and shapes. This difference in color or shape encompasses not only a difference in the color or profile shape of the plastic plates, but also a difference in the color or shape of the symbols or patterns displayed on the plastic plates. Also, the operating conditions can be associated with a combination of colors and shapes, such as a blue star shape, or a white-striped heart shape.

The scanning component 14 can acquire an image represented by the movable members 33a to 33g placed in the first region 11, by scanning the first region 11. The recognition component 15 can recognize the operating conditions associated with the color and/or shape of the movable members 33a to 33g represented by an image acquired by the scanning component 14.

### THIRD EMBODIMENT

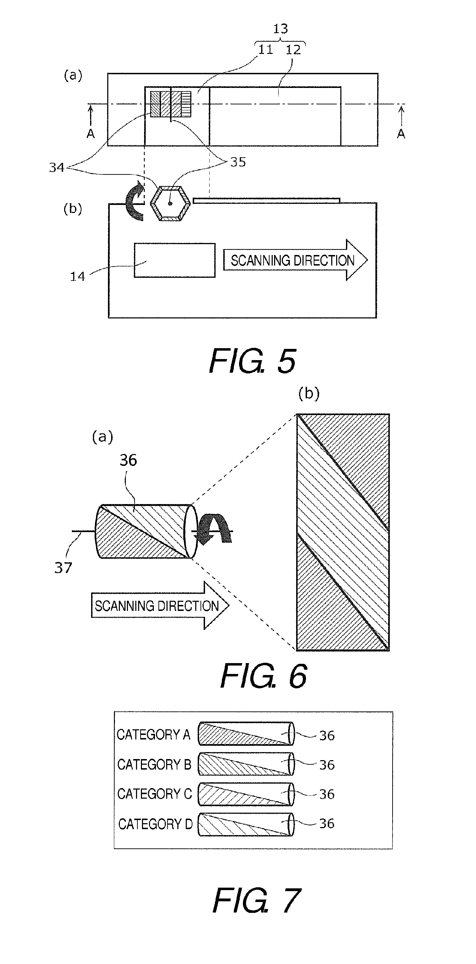

Referring now to FIG. 5, a multifunction device in accordance with a third embodiment will now be explained. In view of the similarity between the first and third embodiments, the parts of the second embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

In the third embodiment, another specific example of a movable member 34 will be described. The movable member 34 in accordance with the third embodiment is installed rotatably in the first region 11, and is a columnar member that represents a specific color and/or a specific shape in a plurality of different portions in the peripheral direction of the side face.

FIG. 5 is a top plan view (a) of the movable member 34 in accordance with the third embodiment, and a cross sectional view (b) of the same as viewed in the A-A direction.

The movable member 34 shown in FIG. 5 includes a plastic hexagonal column whose six side faces have different colors, for example. The movable member 34 is installed horizontally in the first region 11, and is rotatably supported by a support shaft 35 that is parallel to the document holder 13. The user can turn the movable member 34 so that the desired side face of the movable member 34 faces the scanning component 14.

In the example in FIG. 5, operating conditions are associated with the different colors of the side faces of the movable member 34.

The scanning component 14 scans the first region 11 to sense the color of the side face of the movable member 34 facing the scanning component 14.

The recognition component 15 recognizes the operating conditions associated with the color sensed by the scanning component 14.

With this configuration, the user rotates the movable member 34 so that the desired side face will be facing the scanning component 14, and then gives the multifunction device 1 an instruction to start processing, and as a result the operation desired by the user is executed by the multifunction device 1.

A few modification examples of a movable member with a columnar member will now be described.

FIG. 6 is a perspective view (a) of a movable member 36 in accordance with a modification example, and is a developed view (b) of a side face of the movable member 36.

The movable member 36 shown in FIG. 6, for example, is a plastic cylindrical member whose side face is divided into first and second color portions with first and second colors, respectively. The movable member 36 is rotatably supported by a support shaft 37 that is parallel to the scanning direction. The user can turn the movable member 36 so that the desired side face of the movable member 36 will face the scanning component 14.

The side face of the movable member 36 is colored so that the first and second color portions are the same length from the starting end in the scanning direction, at positions that are separated by 180 degrees around the support shaft 37. When the user turns the movable member 36, the first color portion at the position visible to the user and the second color portion at the portion facing the scanning component 14 increase or decrease at the same length from starting end in the scanning direction.

In the example in FIG. 6, the operating conditions are associated with the length of the portion where the same color (i.e., the first color or the second color) continues from the starting end in the scanning direction at the position of the side face of the movable member 36 facing the scanning component 14.

The scanning component 14 senses the length from the starting end in the scanning direction to the portion where the color changes, or the length of the portion where the same color continues from the starting end, at the position of the movable member 36 that faces that scanning component 14 by scanning the first region 11.

The recognition component 15 recognizes the operating conditions associated with the length sensed by the scanning component 14. The operating conditions recognized here can be a single value within a range corresponding to the maximum length sensed by the scanning component 14.

With this configuration, the user turns the movable member 36 so that the desired side face will be facing the scanning component 14, and then gives an instruction to the multifunction device 1 to start processing, and as a result the operation desired by the user, and particularly an operation in accordance with the value of the category desired by the user, is executed by the multifunction device 1.

A plurality of the movable members 36 can be provided in association with a plurality of categories for operating conditions, for example.

FIG. 7 is a simplified diagram of an example of the plurality of the movable members 36. The movable members 36 can be lined up in the first region 11.

In the example in FIG. 7, the operating condition categories can be associated with the positions where the movable members 36 are disposed, or the movable members 36 can have different colors, and the operating condition categories can be associated with the colors of the movable members 36.

With this configuration, the values of the independent categories are recognized by the movable members 36.

Also, a movable member can be represented by texts or graphics at a plurality of different portions in the peripheral direction of the side face.

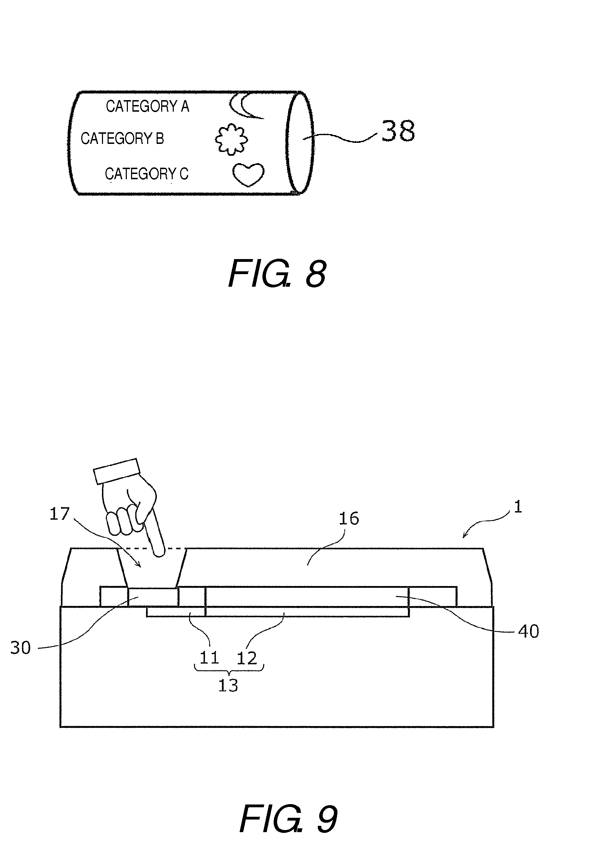

FIG. 8 is a perspective view of a movable member 38 such as this.

In the example in FIG. 8, the operating conditions can be associated with the texts or graphics represented on the movable member 38.

In this case, the scanning component 14 scans the first region 11 to acquire an image represented by the movable member 38 disposed in the first region 11, and the recognition component 15 can recognize the operating conditions associated with the texts or graphics represented by the image acquired by the scanning component 14.

With this configuration, the contents of the categories are recognized according to the texts or the shape of the graphics represented on the movable member 38.

### FOURTH EMBODIMENT

Referring now to FIG. 9, a multifunction device in accordance with a fourth embodiment will now be explained. In view of the similarity between the first and fourth embodiments, the parts of the second embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity.

In the fourth embodiment, a modification example of a lid 16 will be described. As shown in FIG. 9, the lid 16 in accordance with the fourth embodiment has an opening 17 that exposes the movable member 30, provided at a position corresponding to the first region 11.

FIG. 9 is a side cross sectional view of the lid 16 in accordance with the fourth embodiment. The lid 16 shown in FIG. 9 is provided with the opening 17 that exposes the movable member 30 at a position corresponding to the first region 11. The user puts the movable member 30 in the desired state through the opening 17. The movable member 30 can include the above-mentioned movable members 31a to 31c, 33a to 33g, 34, 36, and 38.

With this configuration, if there is no need to open the lid 16, such as when printing printed matter represented by data, the user can put the movable member 30 in the desired state through the opening 17 while the lid 16 is still closed, which is more convenient.

The image scanner, and the multifunction devices equipped with the image scanners in accordance with embodiments of the present invention are described above, but the present invention is not limited to or by these embodiments. Without departing from the gist of the present invention, embodiments of the various modifications that would occur to those skilled in the art, and modes created by combining the constituent elements of different embodiments are also included within the scope of the present invention.

For instance, as shown in FIG. 11, there can be a restricting member (52 and 54) that limits movement from the state in which the movable member 30 is disposed.

As an example, cut-outs 52 can be provided to a plurality of different portions in the sliding direction of the movable members 31a to 31c, and elastic members 54 that engage with these cut-outs 52 can be provided to the guide member 32. Also, cut-outs can be provided to a plurality of different portions in the peripheral direction of the movable members 34, 36, and 38, and elastic members that engage with these cut-outs can be provided to the housing 18. The elastic members can be formed by plastic springs, for example.

With this configuration, sliding and rotation are suppressed from the position where one of the plurality of cut-outs and the elastic members of the movable members 31a to 31c, 34, 36, and 38 engage with each other. Also, the movable members 31a to 31c, 34, 36, and 38 can be slid or rotated to the desired cut-out position against the elastic force of the elastic members.

As another example, an anti-slip member (such as affixing a soft plastic film) can be provided to the face of the movable members 33a to 33g facing the first region 11.

With this configuration, the friction between the anti-slip member and the surface of the document holder 13 in the first region 11 reduces movement away from the positions where the movable members 33a to 33g are disposed. Also, the user can lift up the movable members 33a to 33g and move them to the desired positions.

Limiting movement from the state in which the movable member is disposed prevents a problem whereby the movable member ends up moving between the time when the user put it in the desired state and the operating conditions are recognized, resulting in recognition of the wrong operating conditions.

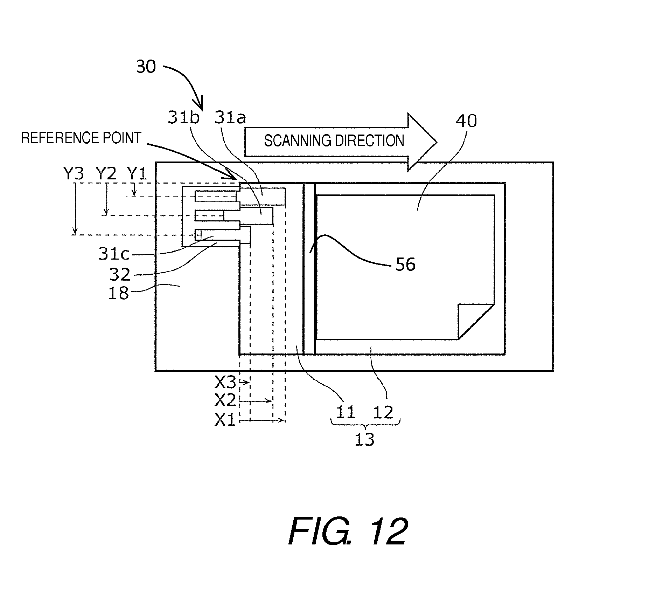

Also, for example, as shown in FIG. 12, there can be an object distal end position restrictor plate 56 that is opaque over its entire surface, that is provided between the first region 11 and the second region 12 on the document holder 13, and that comes into contact with the end of the object placed in the second region 12 and thereby restricts the object from going into the first region 11.

With this configuration, it is less likely that the object, which can be a source of incorrect sensing, will go into the first region 11.

The present invention can be widely applied to image scanners, multifunction devices equipped with an image scanner, and other such devices.

To achieve the stated object, the image scanner in accordance with one mode of the present invention comprises a housing having an opening, a document holder covering the opening in the housing, the document holder having a first region and a second region, a movable member movable relative to the first region of the document holder, a scanning component configured to scan the first region to optically sense the movable member, and configured to scan the second region to acquire an image of an object placed on the second region, and a recognition component configured to determine an operating condition of the image scanner based on a sensed state of the movable member that has been sensed by the scanning component.

Also, the configuration can be such that the sensed state of the movable member is associated with the operating condition of the image scanner. Also, the configuration can be such that the document holder is made of a transparent sheet, and the scanning component is disposed under the document holder

With this mode, since the determined operating condition is associated with the sensed state of the movable member disposed in the first region, complicated and diverse operating condition can be represented more easily than in the past by using the movable member (e.g., the color or shape of the movable member, for example). Also, the user can confirm the operating condition that have been set from the state of the movable member by placing the movable member in a state of being disposed in the first region.

Also, the configuration can be such that the movable member is arrangeable relative to the first region to present at least one of a specific color and a specific shape toward the scanning component, and the recognition component is configured to determine the operating condition of the image scanner that is associated with the at least one of the color and the shape based on the at least one of the color and the shape that is sensed by scanning the first region.

With this mode, complicated and diverse operating condition can be recognized by using the shape or color of the movable member.

Also, the configuration can be such that the operating condition of the image scanner that is determined according to the sensed state of the movable member by the recognition component is indicated in a perceivable manner on at least one of the movable member, the first region of the document holder, and a top face of the housing.

With this mode, the user can easily confirm the set operating condition according to the sensed state of the movable member.

Also, the configuration can be such that the movable member includes a flat member that is installed on a top face of the housing and is retractable relative to the first region, and the recognition component is configured to determine the operating condition of the image scanner that is associated with at least one of a color and a shape of a portion of the flat member that is located on the first region.

With this mode, the operating condition can be represented by using the color or shape of the portion of the flat member that has entered the first region.

Also, the configuration can be such that the movable member includes a flat member that has at least one of a specific color and a specific shape and is removable placed on the first region, and the recognition component is configured to determine the operating condition of the image scanner that is associated with the at least one of the color and the shape of the flat member that is placed on the first region.

With this mode, the operating condition can be represented by using the color or shape of the flat member placed on the first region.

Also, the configuration can be such that the movable member includes a columnar member that is rotatably arranged in the first region and has at least one of a specific color and a specific shape in each of a plurality of different portions of the columnar member along the periphery of the columnar member, and the recognition component is configured to determine the operating condition of the image scanner that is associated with the at least one of the color and the shape of a portion of the columnar member that faces with the scanning component.

With this mode, the operating condition can be represented by using the color or shape presented to the portion of the columnar member that faces with the scanning component.

Also, the image scanner can further include a lid covering the document holder and having an opening that exposes the movable member at a position corresponding to the first region.

With this mode, the user can leave the lid closed and place the movable member in the desired state through the opening, making the device more convenient to use.

Also, the image scanner can further include a restricting member configured to restrict movement of the movable member relative to the first region.

This mode prevents a situation in which the user first places the movable member in the desired state, and then the movable member moves while the operating condition is being determined, thereby incorrectly determines the operating condition.

Also, the image scanner can further includes an opaque object distal end position restrictor plate disposed between the first region and the second region on the document holder, the object distal end position restrictor plate contacting with an end of the object that is placed on the second region to prevent the object from entering the first region.

With this mode, it is less likely that the object will enter the first region due to false detection.

Also, the configuration can be such that when an instruction to start processing is given, sensing of the movable member by scanning the first region, determining of a scanning condition associated with the sensed state of the movable member, and acquiring of the image of the object by scanning the second region according to the determined scanning conditions are performed continuously in this order.

Also, the multifunction device in accordance with a mode of the present invention includes the above-mentioned image scanner and a printer, wherein, when an instruction to start processing is given, sensing of the movable member by scanning the first region, determining of a scanning condition and a printing condition associated with the sensed state of the movable member, acquiring of the image of the object by scanning the second region according to the determined scanning condition, and printing of the image of the object according to the determined printing condition are performed continuously in this order.

The multifunction device in accordance with a mode of the present invention includes the above-mentioned image scanner and a printer, wherein, when data representing printed matter is provided, sensing of the movable member by scanning the first region, determining of a printing condition associated with the sensed state of the movable member, and printing of the printed matter according to the determined printing condition are performed continuously in this order.

With this modes, the image scanner and multifunction device initially determine the operating condition during a series of operations, and then perform operation according to the determined conditions, so the operation intended by the user can be executed smoothly and without anything seeming amiss.

With the image scanner of the present invention, and with a multifunction device equipped with this image scanner, there is a simplified operation component, and the resulting image scanner and multifunction device are suited to setting categories that are more complicated and diverse than in the past. Also, with the image scanner and the multifunction device, the operation component for controlling the image scanner can be simplified and the operation can be made easier.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. An image scanner comprising:
a housing having an opening;
a document holder covering the opening in the housing, the document holder having a first region and a second region;
a movable member movable relative to the first region of the document holder;
a scanning component configured to scan the first region to optically sense the movable member, and configured to scan the second region to acquire an image of an object placed on the second region; and
a recognition component configured to determine an operating condition of the image scanner based on a sensed state of the movable member that has been sensed by the scanning component.

2. The image scanner according to claim 1,
configured such that the sensed state of the movable member is associated with the operating condition of the image scanner.

3. The image scanner according to claim 1 or 2, wherein
the document holder is made of a transparent sheet, and
the scanning component is disposed under the document holder

4. The image scanner according to any one of claims 1 to 3, wherein
the movable member is arrangeable relative to the first region to present at least one of a specific color and a specific shape toward the scanning component, and
the recognition component is configured to determine the operating condition of the image scanner that is associated with the at least one of the color and the shape based on the at least one of the color and the shape that is sensed by scanning the first region.

5. The image scanner according to any one of claims 1 to 4, wherein
the operating condition of the image scanner that is determined according to the sensed state of the movable member by the recognition component is indicated in a perceivable manner on at least one of the movable member, the first region of the document holder, and a top face of the housing.

6. The image scanner according to any one of claims 1 to 5, wherein
the movable member includes a flat member that is installed on a top face of the housing and is retractable relative to the first region, and
the recognition component is configured to determine the operating condition of the image scanner that is associated with at least one of a color and a shape of a portion of the flat member that is located on the first region.

7. The image scanner according to any one of claims 1 to 5, wherein
the movable member includes a flat member that has at least one of a specific color and a specific shape and is removably placed on the first region, and
the recognition component is configured to determine the operating condition of the image scanner that is associated with the at least one of the color and the shape of the flat member that is placed on the first region.

8. The image scanner according to any one of claims 1 to 5, wherein
the movable member includes a columnar member that is rotatably arranged in the first region and has at least one of a specific color and a specific shape in each of a plurality of different portions of the columnar member along the periphery of the columnar member, and
the recognition component is configured to determine the operating condition of the image scanner that is associated with the at least one of the color and the shape of a portion of the columnar member that faces with the scanning component.

9. The image scanner according to any one of claims 1 to 8, further comprising
a lid covering the document holder and having an opening that exposes the movable member at a position corresponding to the first region.

10. The image scanner according to any one of claims 1 to 9, further comprising
a restricting member configured to restrict movement of the movable member relative to the first region.

11. The image scanner according to any one of claims 1 to 10, further comprising
an opaque object distal end position restrictor plate disposed between the first region and the second region on the document holder, the object distal end position restrictor plate contacting with an end of the object that is placed on the second region to prevent the object from entering the first region.

12. The image scanner according to any one of claims 1 to 11,
configured such that, when an instruction to start processing is given, sensing of the movable member by scanning the first region, determining of a scanning condition associated with the sensed state of the movable member, and acquiring of the image of the object by scanning the second region according to the determined scanning condition are performed continuously in this order.

13. A multifunction device comprising:
the image scanner according to any one of claims 1 to 11; and
a printer,
wherein the multifunction device is configured such that, when an instruction to start processing is given, sensing of the movable member by scanning the first region, determining of a scanning condition and a printing condition associated with the sensed state of the movable member, acquiring of the image of the object by scanning the second region according to the determined scanning condition, and printing of the image of the object according to the determined printing condition are performed continuously in this order.

14. A multifunction device comprising:
the image scanner according to any one of claims 1 to 11; and
a printer,
wherein the multifunction device is configured such that, when data representing printed matter is provided, sensing of the movable member by scanning the first region, determining of a printing condition associated with the sensed state of the movable member, and printing of the printed matter according to the determined printing condition are performed continuously in this order.
